(19) Europäisches Patentamt

European Patent Office

Office européen des brevets

(11) **EP 0 928 376 B1**

(12) **EUROPÄISCHE PATENTSCHRIFT**

(45) Veröffentlichungstag und Bekanntmachung des Hinweises auf die Patenterteilung:
**10.07.2002  Patentblatt 2002/28**

(51) Int Cl.⁷: **F16D 48/06**, B60K 41/02
// (F16D109/02, 103:04, 109:04)

(21) Anmeldenummer: **97944729.9**

(22) Anmeldetag: **18.09.1997**

(86) Internationale Anmeldenummer:
**PCT/DE97/02145**

(87) Internationale Veröffentlichungsnummer:
**WO 98/13616 (02.04.1998 Gazette 1998/13)**

(54) **AUTOMATISCH GESTEUERTE KUPPLUNG**

AUTOMATIC CLUTCH

EMBRAYAGE A COMMANDE AUTOMATIQUE

(84) Benannte Vertragsstaaten:
**DE ES FR GB IT**

(30) Priorität: **25.09.1996  DE 19639322**

(43) Veröffentlichungstag der Anmeldung:
**14.07.1999  Patentblatt 1999/28**

(73) Patentinhaber: **DaimlerChrysler AG
70567 Stuttgart (DE)**

(72) Erfinder:
• **KOSIK, Franz
D-73760 Ostfildern (DE)**
• **GRASS, Thomas
D-73660 Urbach (DE)**

(56) Entgegenhaltungen:
WO-A-96/00844          GB-A- 2 163 511
GB-A- 2 245 042          US-A- 5 632 706

• **PATENT ABSTRACTS OF JAPAN vol. 013, no. 340 (M-857), 31.Juli 1989 & JP 01 115742 A (ISUZU MOTORS LTD;OTHERS: 01), 9.Mai 1989, in der Anmeldung erwähnt**

**Beschreibung**

Die Erfindung betrifft eine automatisch gesteuerte Kupplung im Antriebstrang eines Kraftfahrzeuges mit fahrerseitig zwischen unterschiedlichen Fahr- bzw. Getriebestufen geschaltetem Getriebe, mit einem die Kupplung automatisch betätigenden Stellaggregat und einer zu dessen Steuerung dienenden Sensorik, welche (unter anderem) eine fahrerseitige Betätigung einer Fahrzeugbremse, eine fahrerseitige Betätigung eines Steuerorgans (z.B. Drosselklappe) des Motors sowie einen Einschaltzustand einer Fahr- bzw. Getriebestufe erfaßt und die Kupplung auf ein Kriechmoment einstellt, wenn bei laufendem Motor die Fahrzeugbremse sowie das Steuerorgan des Motors unbetätigt sind, bzw. die Kupplung bei bleibender Betätigung der Fahrzeugbremse und nicht betätigtem Steuerorgan öffnet.

Bei Kraftfahrzeugen mit üblichen Verbrennungsmotoren muß im Antriebstrang ein Getriebe angeordnet sein, um das Übersetzungsverhältnis zwischen der Drehzahl des Fahrzeugmotors und der Drehzahl der Antriebsräder entsprechend der jeweiligen Fahrgeschwindigkeit und Belastung des Fahrzeuges ändern zu können. Bei üblichen Getrieben muß während des Wechsels einer Fahrstufe der Kraftfluß zwischen Motor und Antriebsrädern durch Öffnen einer Kupplung unterbrochen werden.

Es ist grundsätzlich bekannt, hierzu automatisch gesteuerte Kupplungen einzusetzen, d.h. die Kupplung wird beim Wechsel einer Getriebestufe automatisch geöffnet und nachfolgend wieder geschlossen.

Um Rangiermanöver zu erleichtern, ist es grundsätzlich bekannt, die automatische Kupplung auf ein schwaches übertragbares Drehmoment, d.h. ein Kriechmoment, einzustellen, wenn eine Getriebestufe eingelegt ist, der Motor läuft und weder die Betriebsbremse des Fahrzeuges noch ein zur Leistungssteuerung des Motors dienendes Fahrpedal od.dgl. betätigt sind. Hierbei wird ausgenutzt, daß die Motoren von Kraftfahrzeugen heute üblicherweise eine wirkungsvolle automatische Motorsteuerung besitzen, die den Motor bei unbetätigtem Fahrpedal auf einer Mindestdrehzahl, in der Regel auf der sogenannten Leerlaufdrehzahl, zu halten vermag, und zwar auch dann, wenn der Motor mehr oder weniger stark belastet wird Aufgrund der in diesem Falle vorgesehenen Übertragung eines Kriechmomentes durch die Kupplung kann sich das Fahrzeug kriechend in Bewegung setzen bzw. eine Kriechbewegung ausführen, wie es für Rangiermanöver wünschenswert ist.

Nach der GB 2 245 042 A wird die Kupplung bei eingelegter Fahr- bzw. Getriebestufe auf ein Kriechmoment eingestellt, sobald die Fahrgeschwindigkeit einen Schwellwert unterschreitet. Sollte diese Geschwindigkeitsschwelle während einer vorbestimmten Zeitspanne unterschritten bleiben, wird die Kupplung geöffnet.

Auch aus der JP 1-115742 (A) ist es gemäß PATENTS ABSTRACTS OF JAPAN, M-857 July 31, 1989Vol. 13/No. 340 bekannt, die automatisch gesteuerte Kupplung vollständig zu öffnen, wenn die Fahrzeugbremse in der Kriechphase länger als eine vorbestimmte Zeitspanne betätigt bleibt.

Die JP 6-159397 (A) zeigt gemäß PATENTS ABSTRACTS OF JAPAN M-1672 September 13, 1994Vol 18/No. 491, daß das Kriechmoment automatisch in einer Weise gesteuert werden soll, bei der eine Unterschreitung einer Mindestdrehzahl des Fahrzeugmotors vermieden wird.

Aufgabe der Erfindung ist es nun, die Kupplungssteuerung bei Rangiermanövern noch weiter zu verbessern.

Diese Aufgabe wird erfindungsgemäß dadurch gelöst, daß das Kupplungsmoment bei Betätigung der Fahrzeugbremse kontinuierlich gemäß einer vorgegebenen Rampe abgebaut wird, so daß das Kupplungsmoment bei betätigt bleibender Bremse langsam vermindert wird, bis ein vollständig geöffneter Zustand der Kupplung vorliegt.

Die Erfindung beruht auf dem allgemeinen Gedanken, bei Fahrmanövern mit nicht betätigtem Fahrpedal od.dgl. im Falle einer Bremsbetätigung über die Kupplung noch ein gewisses Drehmoment zu übertragen, welches im Vergleich zu den erreichbaren Bremskräften klein ist und gegenüber dem bei nicht betätigter Bremse und unbetätigtem Fahrpedal übertragenen Kriechmoment langsam vermindert bzw. auf verschwindende Werte gebracht wird. Damit wird gewährleistet, daß der Fahrer zunächst die Fahrgeschwindigkeit durch mehr oder weniger starke Bremsbetätigung gegen die Kriechneigung des Fahrzeuges steuern kann. Gleichzeitig ist gewährleistet, daß unerwünschte Überlastungen der Kupplung vermieden werden.

Ein besonderer Vorzug der Erfindung liegt darin, daß bei nur kurzzeitiger Betätigung der Bremse während eines Kriechmanövers ständig ein Drehmoment durch die Kupplung übertragen wird und bei Beendigung der Bremsbetätigung verzögerungsfrei in reproduzierbarer Stärke zur Verfügung steht, ohne daß dazu aufwendige Steuerungsmaßnahmen notwendig wären.

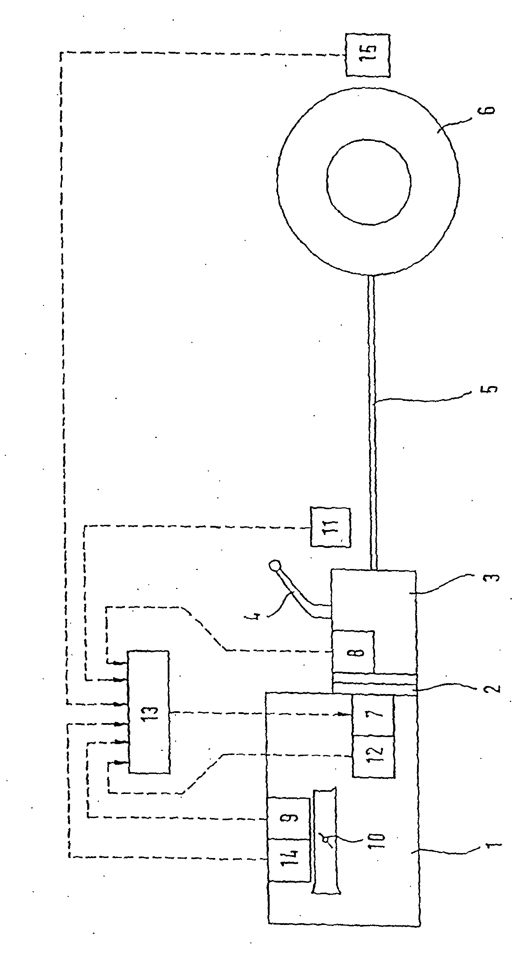

Im übrigen wird hinsichtlich vorteilhafter Merkmale der Erfindung auf die Ansprüche sowie die nachfolgende Erläuterung der Zeichnung verwiesen, anhand der besonders bevorzugte Ausführungsformen beschrieben werden.

Dabei zeigt die einzige Figur eine schematisierte Darstellung eines Antriebstranges eines Kraftfahrzeuges sowie der für die Kupplungssteuerung wesentlichen Komponenten.

Ein Verbrennungsmotor 1 ist über eine automatisch betätigte Kupplung 2 und ein Getriebe 3, dessen Fahrstufen bzw. Gänge durch manuelle Betätigung eines Schalthebels 4 gewechselt werden, und eine Antriebswelle 5, z.B. eine Kardanwelle, mit Antriebsrädern 6 eines im übrigen nicht näher dargestellten Kraftfahrzeuges antriebsmäßig verbunden.

Die Betätigung der Kupplung 2 erfolgt automatisch mittels eines motorischen Stellaggregates 7, zu dessen Steuerung eine Sensorik zur Überwachung verschiedener Parameter des Fahrbetriebes vorgesehen ist.

Diese Sensorik umfaßt eine Sensoranordnung 8, welche dem Getriebe 3 bzw. dem Schalthebel 4 zugeordnet ist und dessen Stellungen und/oder Bewegungen erfaßt und damit die jeweils eingelegte Fahrstufe bzw. den jeweils eingelegten Gang "kennt". Des weiteren ist ein Sensor 9 vorgesehen, welcher die Stellung eines zur Leistungssteuerung des Motors 1 dienenden Organs, beispielsweise einer Drosselklappe 10 des Luftansaugsystems des Motors 1, oder eines die Drosselklappe betätigenden Fahrpedales (nicht dargestellt) erfaßt.

Außerdem umfaßt die Sensorik einen Signalgeber 11, der die Betätigung einer nicht dargestellten Fahrzeugbremse überwacht. Dieser Signalgeber 11 kann durch einen Bremslichtschalter gebildet werden, welcher bei Betätigung der Fahrzeugbremse zur Einschaltung der Bremslichter zwangsläufig betätigt wird, z.B. durch ein (nicht dargestelltes) fahrerseitig betätigtes Bremspedal.

Schließlich umfaßt die Sensorik einen Weggeber 12, welcher dem Stellaggregat 7 zugeordnet ist und dessen Stellung und damit einen Parameter erfaßt, welcher zur Größe des von der automatischen Kupplung 2 übertragbaren Drehmomentes analog ist.

Die Signale der Sensoranordnung 8, des Sensors 9, des Signal gebers 11 und des Weggebers 12 werden von einer Steuerschaltung 13 verarbeitet, welche das Stellaggregat 7 steuert. Die Steuerschaltung 13 kommuniziert des weiteren vorzugsweise mit einer Motorsteuerung 14, welche unter anderem die Aufgabe hat, die Motordrehzahl weitestgehend unabhängig von der Belastung des Motors auf einer Mindestdrehzahl, etwa der Leerlaufdrehzahl, zu halten. Außerdem "kennt" die Motorsteuerung 14 das jeweils vom Motor erzeugte Drehmoment. Im übrigen kommuniziert die Steuerschaltung 13 mit Drehzahlgebern 15, welche den Fahrzeugrädern zugeordnet sind. Damit kann die Steuerschaltung 13 auch den Bewegungszustand des Fahrzeuges "erkennen".

Aufgrund des Informationsaustausches mit der Motorsteuerung 14 kann die Steuerschaltung 13 auch das jeweils von der Kupplung 2 übertragene Moment in Abhängigkeit von der Stellung des Stellaggregates 7 ermitteln. Für das von der Kupplung 2 übertragbare Moment $M_K$ gilt bei konstanter Fahrgeschwindigkeit:

$$M_K = M_{Mot} - J_{Mot} d\omega_{Mot}/dt.$$

Hierbei ist $M_{Mot}$ das vom Motor 1 erzeugte Drehmoment, welches von der Motorsteuerung 14 erkannt wird, $J_{Mot}$ das durch die Konstruktion des Motors 1 vorgegebene Trägheitsmoment des Motors 1 und $\omega_{Mot}$ die Drehzahl des Motors. Mit t wird die Zeit bezeichnet.

Da alle motorbezogenen Größen von der Motorsteuerung 14 erfaßbar sind und aus den Signalen der Drehzahlgeber 15 erkennbar ist, ob das Fahrzeug mit etwa konstanter Geschwindigkeit fährt, kennt die Steuerschaltung 13 aufgrund ihres Zusammenwirkens mit der Motorsteuerung 14 und den Drehzahlgebern 15 das jeweilige Kupplungsmoment $M_K$. Darüber hinaus kennt die Steuerschaltung 13 aus den Signalen des Weggebers 12 die Position des Stellaggregates 7, so daß für die Steuerschaltung 13 auch die Proportionalität zwischen dem Kupplungsmoment $M_K$ und dem Stellweg des Stellaggregates 7 ermittelbar ist. Im Ergebnis kennt also die Steuerschaltung 13 das jeweils an der Kupplung 2 eingestellte übertragbare Moment.

Wenn die Drosselklappe 10 oder ein die Drosselklappe 10 steuerndes Fahrpedal ihre Ruhelage einnehmen, d.h. das Fahrpedal ist nicht betätigt, und wenn außerdem der Signalgeber 11 kein Bremssignal erzeugt, d.h. die Fahrzeugbremse ist nicht betätigt, so steuert die Steuerschaltung 13 das Stellaggregat 7 derart, daß die Kupplung 2 ein vorgegebenes Kriechmoment von beispielsweise 30 Nm zu übertragen vermag. Damit hat das Fahrzeug eine für Rangiermanöver vorteilhafte Kriechneigung.

Wird nun die Fahrzeugbremse betätigt, so wird das Kupplungsmoment gemäß einer ersten Ausführungsform der Erfindung kontinuierlich gemäß einer vorgegebenen Rampe abgebaut, so daß das Kupplungsmoment bei betätigt bleibender Bremse langsam vermindert wird, bis ein vollständig geöffneter Zustand der Kupplung 2 erreicht wird.

Gemäß einer zweiten vorteilhaften Ausführungsform der Erfindung kann das Kupplungsmoment bei Betätigung der Fahrzeugbremse gegenüber dem Kriechmoment zunächst vermindert werden, beispielsweise auf einen Wert, der etwa einem Drittel des Kriechmomentes entspricht. Dieses verminderte übertragbare Moment wird bei weiterhin betätigt bleibender Fahrzeugbremse für eine vorgegebene Zeitspanne unverändert belassen. Danach wird das Kupplungsmoment kontinuierlich abgebaut.

Gegebenenfalls kann das gegenüber dem Kriechmoment verminderte Kupplungsmoment bei Bremsbetätigung und unbetätigtem Leistungssteuerorgan des Motors langsam eingestellt werden.

**Patentansprüche**

1. Automatisch gesteuerte Kupplung (2) im Antriebstrang (1,2,3,5,6) eines Kraftfahrzeuges mit fahrerseitig zwischen unterschiedlichen Fahr- bzw. Getriebestufen geschaltetem Getriebe (3), mit einem die Kupplung automatisch betätigenden Stellaggregat (7) und einer zu dessen Steuerung dienenden Sensorik (8,9,12,14,15), welche eine fahrerseitige Betätigung einer Fahrzeugbremse, eine fahrerseitige Betätigung eines Steuerorgans (10) des Motors sowie einen Einschaltzustand einer Fahr- bzw. Getriebestufe erfaßt und die Kupplung auf ein Kriechmoment einstellt, wenn bei laufendem Motor die Fahrzeugbremse sowie das Steuerorgan unbetätigt sind, bzw. die Kupplung bei bleibender Betätigung der Fahrzeugbremse und nicht betätigtem Steuerorgan öffnet,
**dadurch gekennzeichnet,**
**daß** das Kupplungsmoment bei Betätigung der Fahrzeugbremse kontinuierlich gemäß einer vorgegebenen Rampe abgebaut wird, so daß das Kupplungsmoment bei betätigt bleibender Bremse langsam vermindert wird, bis ein vollständig geöffneter Zustand der Kupplung vorliegt.

**2.** Kupplung nach Anspruch 1,
**dadurch gekennzeichnet,**
**daß** bei Bremsbetätigung und nicht betätigtem Steuerorgan (10) das Kriechmoment oder ein gegenüber dem Kriechmoment vermindertes Kupplungsmoment eingestellt bleibt oder wird und bei betätigt bleibender Bremse nach einer vorgegebenen Haltezeit kontinuierlich abgebaut wird.

**3.** Kupplung nach Anspruch 2,
**dadurch gekennzeichnet,**
**daß** das verminderte Kupplungsmoment bei Bremsbetätigung und unbetätigtem Steuerorgan (10) langsam eingestellt wird.

## Claims

**1.** Automatically controlled clutch (2) in the drive train (1, 2, 3, 5, 6) of a motor vehicle with transmission (3) on the driver's side which can be switched between different travelling or transmission stages, with an adjusting unit (7) automatically activating the clutch and a sensor arrangement (8, 9, 12, 14, 15) serving to control the same, wherein this sensor arrangement (8, 9, 12, 14, 15) records driver-side activation of a vehicle brake, driver-side activation of a control unit (10) of the engine as well as a switched state of a travelling or transmission stage and adjusts the clutch to a creep moment if, when the engine is running, the vehicle brake as well as the control unit are not activated / the clutch opens when the vehicle brake remains activated and the control unit is not activated,
**characterised in that**
the clutch moment is continuously decreased according to a given ramp upon activation of the vehicle brake in such a way that when the brake remains activated the clutch moment is slowly reduced until there is a completely open state of the clutch.

**2.** Clutch according to claim 1
**characterised in that**
when the brake is activated and the control unit (10) is not activated the creep moment or a clutch moment reduced in relation to the creep moment remains set or is set and when the brake remains activated after a given time is continuously reduced.

**3.** Clutch according to claim 2
**characterised in that**
the reduced clutch moment is slowly adjusted when the brake is activated and the control unit (10) is not activated.

## Revendications

**1.** Embrayage à commande automatique (2) monté dans la ligne d'arbre (1, 2, 3, 4, 5, 6) d'un véhicule à moteur avec des pignons (3) montés entre les différents étages moteur et/ou boîte de vitesse avec un groupe de réglage (7) actionnant automatiquement cet embrayage et une technique sensorielle (8, 9, 12, 14, 15) servant à la commande de celui-ci, englobant la manoeuvre par le conducteur d'un frein du véhicule, la manoeuvre par le conducteur d'un organe de commande (10) du moteur ainsi qu'une position de fonctionnement sur une vitesse de marche ou sur un rapport de boîte et règle l'embrayage sur un couple lent lorsque le moteur étant en marche, le frein et l'organe de commande ne sont pas sollicités et/ou ouvre l'embrayage pour une sollicitation inchangée du frein du véhicule sans sollicitation de l'organe de commande,
**caractérisé en ce,**
**que** le couple d'embrayage diminue en cas d'action continue sur le frein du moteur suivant une pente donnée, en sorte que le couple d'embrayage diminue lentement, pour une sollicitation constante, jusqu'à ce que l'embrayage atteigne une position d'ouverture totale.

**2.** Embrayage selon la revendication 1, **caractérisé en ce que**, en cas de sollicitation du frein, mais non de l'organe de commande (10), le couple lent ou un couple d'embrayage réduit par rapport à ce couple lent reste établi, ou s'établit, et au cas où le frein resterait sollicité, il s'affaiblira progressivement à la suite d'une période d'arrêt donnée.

**3.** Embrayage selon la revendication 2, **caractérisé en ce qu'**en cas de sollicitation du frein, mais non de l'organe de commande (10), le couple d'embrayage réduit s'annule lentement.